(19)

Europäisches
Patentamt
European
Patent Office
Office européen
des brevets

(11) **EP 4 283 352 A1**

(12) **EUROPEAN PATENT APPLICATION**
published in accordance with Art. 153(4) EPC

(43) Date of publication:
**29.11.2023 Bulletin 2023/48**

(21) Application number: **22742618.6**

(22) Date of filing: **19.01.2022**

(51) International Patent Classification (IPC):
**G02B 6/036** (2006.01)     **G02B 6/44** (2006.01)

(52) Cooperative Patent Classification (CPC):
**G02B 6/036; G02B 6/44**

(86) International application number:
**PCT/JP2022/001856**

(87) International publication number:
**WO 2022/158496 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.01.2021 JP 2021007797**

(71) Applicant: **Furukawa Electric Co., Ltd.
Tokyo 100-8322 (JP)**

(72) Inventors:
• **MUKASA, Kazunori
Tokyo 100-8322 (JP)**
• **KASAHARA, Minoru
Tokyo 100-8322 (JP)**
• **AISO, Keiichi
Tokyo 100-8322 (JP)**

• **TSUCHIDA, Yukihiro
Tokyo 100-8322 (JP)**
• **YOMOGITA, Naoya
Tokyo 100-8322 (JP)**
• **SUGANE, Takumi
Tokyo 100-8322 (JP)**
• **SUGANUMA, Ichihiko
Tokyo 100-8322 (JP)**
• **GONOHE, Tomoaki
Tokyo 100-8322 (JP)**
• **IWAYA, Mitsuhiro
Tokyo 100-8322 (JP)**
• **VARALLYAY, Zoltan
1158 Budapest (HU)**
• **MIHALFFY, Tamas
1158 Budapest (HU)**

(74) Representative: **SSM Sandmair
Patentanwälte Rechtsanwalt
Partnerschaft mbB
Joseph-Wild-Straße 20
81829 München (DE)**

(54) **OPTICAL FIBER, OPTICAL FIBER RIBBON, AND OPTICAL FIBER CABLE**

(57)     An optical fiber includes a core portion, a side core layer, a cladding portion, a primary layer, and a secondary layer. Regarding a relative refractive-index difference $\Delta 1$ of the core portion, a relative refractive-index difference $\Delta 2$ of the side core layer, and a relative refractive-index difference $\Delta Clad$ of the cladding portion; the relationship $\Delta 1 > \Delta Clad > \Delta 2$ holds true as well as the relationship $0 > \Delta 2$ holds true. That is, when the relative refractive-index difference $\Delta 1$ is equal to or greater than 0.23% and equal to or smaller than 0.30%, when the relative refractive-index difference $\Delta 2$ is equal to or greater than -0.23% and equal to or smaller than -0.08%, when the difference $(\Delta 1 - \Delta 2)$ is equal to or greater than 0.36% and equal to or smaller than 0.53%, when a core diameter 2a represents the core diameter of the core portion, and when an outer diameter 2b represents the outer diameter of the side core layer; the ratio b/a is equal to or greater than 2 and equal to or smaller than 5; the core diameter 2a is equal to or greater than 11.5 $\mu$m and equal to or smaller than 14.5 $\mu$m; the effective core area at the wavelength of 1550 nm is equal to or greater than 100 $\mu$m$^2$ and equal to or smaller than 160 $\mu$m$^2$; the primary layer thickness as well as the secondary layer thickness is equal to 5 $\mu$m; the primary elastic modulus is smaller than the secondary elastic modulus; and the microbending loss at the wavelength of 1550 is equal to or smaller than 1.0 dB/km.

EP 4 283 352 A1

# FIG.1

**Description**

Field

The present invention relates to an optical fiber, an optical fiber tape core wire, and an optical fiber cable.

Background

An optical fiber that is equipped with a W-type refractive index profile has been an active subject for study (Patent Literature 1 to Patent Literature 4). The W-type refractive index profile is adopted, for example, in order to expand the effective core area of an optical fiber. In an optical fiber having a large effective core area, the occurrence of a nonlinear optical effect within the optical fiber is held down. Hence, such an optical fiber can be suitably used as a long-distance optical transmission line. Meanwhile, the effective core area is sometimes referred to as Aeff.

In Patent Literature 2 is disclosed a technology in which an optical fiber includes a primary coating layer meant for covering the outside surface of the cladding layer and includes a secondary coating layer meant for covering the outside surface of the primary coating layer. The primary coating layer is made of an ultraviolet-curing resin having the Young's modulus equal to or smaller than 1.0 MPa, and has the outer diameter equal to or greater than 130 $\mu$m and equal to or smaller than 250 $\mu$m. The secondary coating layer is made of an ultraviolet-curing resin having the Young's modulus equal to or greater than 500 MPa, and has the outer diameter equal to or greater than 160 $\mu$m and equal to or smaller than 400 $\mu$m.

Citation List

Patent Literature

   [Patent Literature 1] Japanese Patent No. 6500451
   [Patent Literature 2] Japanese Patent No. 6527973
   [Patent Literature 3] Japanese Patent Application Laid-open No. 2003-66259
   [Patent Literature 4] Japanese Patent Application Laid-open No. 2009-122277

Summary

Technical Problem

Generally, the effective core area and the microbending loss are in a tradeoff relationship. If an attempt is made to expand the effective core area, then the microbending less tends to increase. When an optical fiber is to be put to practical use as an optical transmission line, there are times when taping or cabling of the optical fiber needs to be performed. Herein, taping implies arranging a plurality of optical fibers to form an optical fiber tape core wire. Moreover, cabling implies disposing tension members or sheaths in optical fibers or an optical fiber tape core wire, and forming an optical fiber cable. In an optical fiber in which taping or cabling is to be performed, sometimes it is required to have a small microbending loss. That is because, when the microbending loss is large, if taping or cabling of an optical fiber is performed, then the transmission loss increases to a greater level than the transmission loss occurring in the case of using only the optical fibers. In that regard, there is room to study about expanding the effective core area as well as reducing the microbending loss.

The present invention has been made in view of the issues mentioned above, and it is an objective of the present invention to provide an optical fiber having an expanded effective core area and having a low microbending loss, and to provide an optical fiber tape core wire and an optical fiber cable in which such optical fibers are used. Solution to Problem

To solve the above-described problem and achieve the object an optical fiber according to one aspect of the present invention includes: a core portion made of glass; a side core layer made of glass and configured to enclose an outer periphery of the core portion; a cladding portion made of glass and configured to enclose an outer periphery of the side core layer; and a coating layer including a primary layer made of resin and configured to enclose an outer periphery of the cladding portion, and a secondary layer made of resin and configured to enclose an outer periphery of the primary layer, wherein a relationship $\Delta 1 > \Delta Clad > \Delta 2$ and a relationship $0 > \Delta 2$ are satisfied where $\Delta 1$ represents relative refractive-index difference of average maximum refractive index of the core portion with respect to average refractive index of the cladding portion, $\Delta 2$ represents relative refractive-index difference of average refractive index of the side core layer with respect to average refractive index of the cladding portion, and ∆Clad represents relative refractive-index difference of average refractive index of the cladding portion with respect to refractive index of pure silica glass, the relative refractive-index difference ∆1 is equal to or greater than 0.23% and equal to or smaller than 0.30%, the relative refractive-index difference ∆2 is equal to or greater than -0.23% and equal to or smaller than -0.08, difference (∆1-∆2) is equal to or greater than 0.36% and equal to or smaller than 0.53%, a ratio b/a is equal to or greater than 2 and equal to or smaller than 5 when the core portion has core diameter 2a and when the side core layer has an outer diameter 2b, the core diameter 2a is equal to or greater than 11.5 μm and equal to or smaller than 14.5 μm, an effective core area at wavelength of 1550 nm is equal to or greater than 90 m$^2$ and equal to or smaller than 150 μm$^2$, a primary layer thickness representing thickness of the primary layer and a secondary layer thickness representing thickness of the secondary layer are equal to or greater than 5 μm, a primary elastic modulus representing modulus of elasticity of the primary layer is smaller than a secondary elastic modulus representing modulus of elasticity of the secondary layer, and microbending loss at wavelength of 1550 nm is equal to or smaller than 1.0 dB/km.

A ratio of the secondary layer thickness with respect to the primary layer thickness may be smaller than 1.

The primary elastic modulus may be equal to or greater than 0.2 MPa and equal to or smaller than 3.0 MPa, and the secondary elastic modulus may be equal to or greater than 5.0 MPa and equal to or smaller than 2000 MPa.

The primary elastic modulus may be equal to or greater than 0.2 MPa and equal to or smaller than 1.0 MPa, and the secondary elastic modulus may be equal to or greater than 500 MPa and equal to or smaller than 2000 MPa.

The primary elastic modulus may be equal to or greater than 0.3 MPa and equal to or smaller than 0.6 MPa, and the secondary elastic modulus may be equal to or greater than 600 MPa and equal to or smaller than 1800 MPa.

The microbending loss may represent a value measured according to sandpaper method.

Breaking elongation of the secondary layer may be equal to or greater than 2.5% and equal to or smaller than 80%.

Cutoff wavelength may be equal to or smaller than 1530 nm.

The primary layer thickness and the secondary layer thickness may be equal to or greater than 5 μm and equal to or smaller than 60 μm.

An optical fiber tape core wire according to one aspect of the present invention includes a plurality of the optical fiber.

An optical fiber cable according to one aspect of the present invention includes the optical fiber. Advantageous Effects of Invention

According to the present embodiment, it becomes possible to achieve an optical fiber having an expanded effective core area and a low microbending loss.

Brief Description of Drawings

FIG. 1 is a schematic cross-sectional view of an optical fiber according to a first embodiment.
FIG. 2 is a diagram illustrating refractive index profiles of the optical fiber according to the first embodiment.
FIG. 3A is a diagram illustrating an example of the relationship between a relative refractive-index difference ∆2, a core diameter 2a, and an effective core area Aeff.
FIG. 3B is a diagram illustrating an example of the relationship between a relative refractive-index difference ∆2, a core diameter 2a, and an effective core area Aeff.
FIG. 3C is a diagram illustrating an example of the relationship between a relative refractive-index difference ∆2, a core diameter 2a, and an effective core area Aeff.
FIG. 4A is a diagram illustrating other example of the relationship between the relative refractive-index difference ∆2, the core diameter 2a, and the effective core area Aeff.
FIG. 4B is a diagram illustrating other example of the relationship between the relative refractive-index difference ∆2, the core diameter 2a, and the effective core area Aeff.
FIG. 4C is a diagram illustrating other example of the relationship between the relative refractive-index difference ∆2, the core diameter 2a, and the effective core area Aeff.
FIG. 5A is a diagram representing an example of the relationship between the relative refractive-index difference ∆2, the core diameter 2a, and the microbending loss.
FIG. 5B is a diagram representing an example of the relationship between the relative refractive-index difference ∆2, the core diameter 2a, and the microbending loss.
FIG. 5C is a diagram representing an example of the relationship between the relative refractive-index difference ∆2, the core diameter 2a, and the microbending loss.
FIG. 6A is a diagram representing other example of the relationship between the relative refractive-index difference ∆2, the core diameter 2a, and the microbending loss.

FIG. 6B is a diagram representing other example of the relationship between the relative refractive-index difference $\Delta 2$, the core diameter 2a, and the microbending loss.

FIG. 6C is a diagram representing other example of the relationship between the relative refractive-index difference $\Delta 2$, the core diameter 2a, and the microbending loss.

FIG. 7A is a diagram representing other example of the relationship between the relative refractive-index difference $\Delta 2$, the core diameter 2a, and the microbending loss.

FIG. 7B is a diagram representing other example of the relationship between the relative refractive-index difference $\Delta 2$, the core diameter 2a, and the microbending loss.

FIG. 7C is a diagram representing other example of the relationship between the relative refractive-index difference $\Delta 2$, the core diameter 2a, and the microbending loss.

FIG. 8 is a diagram illustrating an exemplary relationship between a relative refractive-index difference $\Delta 1$ and the average value of the microbending loss.

FIG. 9 is a diagram illustrating an exemplary relationship between the difference ($\Delta 1$-$\Delta 2$) and the microbending loss.

FIG. 10 is a diagram illustrating an exemplary relationship between the effective core area Aeff and the microbending loss.

FIG. 11 is a schematic diagram illustrating an optical fiber tape core wire according to a second embodiment.

FIG. 12 is a schematic diagram illustrating an optical fiber tape core wire according to a third embodiment.

FIG. 13 is a schematic cross-sectional view of an optical fiber cable according to a fourth embodiment.

Description of Embodiments

Exemplary embodiments of the present invention are described below in detail with reference to the accompanying drawings. However, the present invention is not limited by the embodiments described below. In the drawings, identical or corresponding constituent elements are referred to by the same reference numerals. Moreover, in the present written description, the cutoff wavelength or the effective cutoff wavelength implies the cable cutoff wavelength ($\lambda$cc) defined in ITU-T G.650.1 of the International Telecommunications Union (ITU). Regarding the other terms that are not specifically defined in the present written description, it is assumed that the definitions and the measurement methods given in G.650.1 and G.650.2 are followed.

(First embodiment)

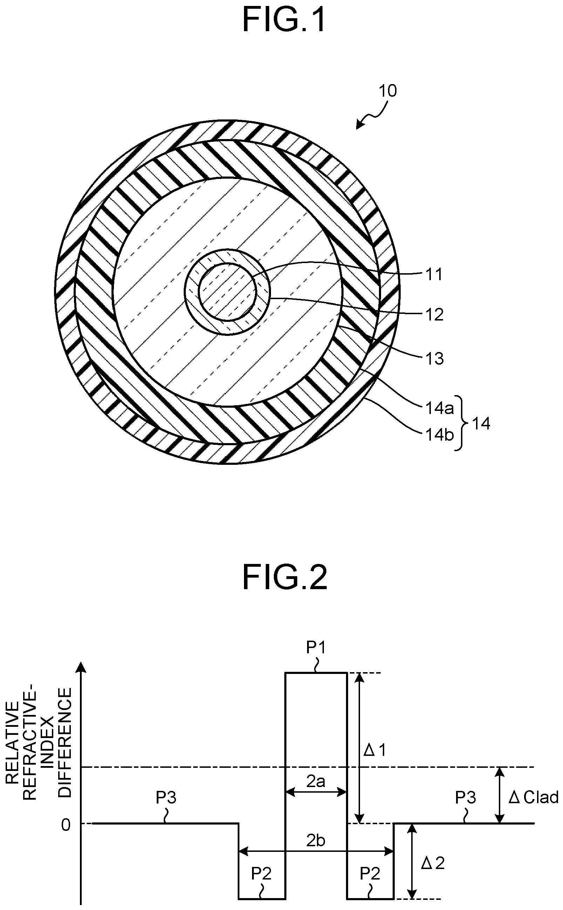

FIG. 1 is a schematic cross-sectional view of an optical fiber according to a first embodiment. An optical fiber 10 is made of silica based glass, and includes a core portion 11; a side core layer 12 that encloses the outer periphery of the core portion 11; and a cladding portion 13 that encloses the outer periphery of the side core layer 12. The portion of the optical fiber 10 in which the core portion 11, the side core layer 12, and the cladding portion 13 are included is made of glass, and is sometimes referred to as a glass optical fiber. Moreover, the optical fiber 10 includes a coating layer 14 that encloses the outer periphery of the cladding portion 13. The coating layer 14 includes a primary layer 14a for enclosing the outer periphery of the cladding portion 13, and includes a secondary layer 14b for enclosing the outer periphery of the primary layer 14a. An optical fiber that includes the coating layer 14 is sometimes referred to as an optical fiber core wire.

FIG. 2 is a diagram illustrating the refractive index profiles of the optical fiber 10. A profile P1 represents the refractive index profile of the core portion 11 and is, what is called, a step type refractive index profile. A profile P2 represents the refractive index profile of the side core layer 12. A profile P3 represents the refractive index profile of the cladding portion 13.

The refractive index profile of the core portion 11 is not always a geometrically-ideal step type refractive index profile. That is, there are times when the shape of the apex is not flat but has asperity due to the manufacturing property, or there are times when the shape has a long train from the apex. In such a case, within the range of a core diameter 2a of the core portion 11 according to the manufacturing design, the refractive index of the region that is at the apex of the refractive index profile and that is substantially flat serves as the index for deciding on a relative refractive-index difference $\Delta 1$. Meanwhile, if the substantially flat region is believed to be divided into a plurality of sections or if there is continuous variation because of which it is difficult to define the substantially flat region; then, of the core portion other than the portion in which the refractive index rapidly changes toward the neighboring layer, when at least some portion is within the relative refractive-index difference $\Delta 1$ mentioned above and when a difference $\Delta$ between the maximum value and the minimum value is within $\pm 30\%$ of a particular value, it is confirmed that the characteristics close to the desired characteristics can be expressed without any particular problem.

Given below is the explanation about the structural parameters of the optical fiber 10. As explained above, the core portion 11 has the core diameter 2a. Moreover, the side core layer 12 has an outer diameter 2b.

Herein, $\Delta 1$ represents the relative refractive-index difference of the average maximum refractive index of the core portion 11 with respect to the average refractive index of the cladding portion 13 (i.e., represents the maximum relative refractive-index difference). Moreover, Δ2 represents the relative refractive-index difference of the average refractive index of the side core layer 12 with respect to the average refractive index of the cladding portion 13. The average maximum refractive index of the core portion 11 represents the average value in a radial direction of the refractive index of the region that is at the apex of the refractive index profile and that is substantially flat. The average refractive index of the side core layer 12 as well as the average refractive index of the cladding portion 13 represents the average value of the refractive index in a radial direction of the concerned refractive index profile.

Furthermore, ΔClad represents the relative refractive-index difference of the average refractive index of the cladding portion 13 with respect to the refractive index of pure silica glass. Herein, it is assumed that pure silica glass is extremely-pure silica based glass that actually does not include a dopant, which causes variation in the refractive index, and that has the refractive index at the wavelength of 1550 nm to be approximately equal to 1.444. In FIG. 2, the relative refractive-index difference of the pure silica glass with respect to the average refractive index of the cladding portion 13 is indicated using a dashed-dotted line.

As far as the relative refractive-index differences Δ1, Δ2, and ΔClad are concerned, the relationship Δ1>ΔClad>Δ2 holds true as well as the relationship 0>Δ2 holds true. That is, the optical fiber 10 has the W-type refractive index profile. Meanwhile, in FIG. 2, although it is illustrated that the relative refractive-index difference ΔClad is smaller than 0%, it can alternatively be equal to or greater than 0%.

Given below is the explanation of the constituent material of the optical fiber 10. The core portion 11 is made of silica based glass that includes a refractive index adjustment dopant meant for increasing the refractive index. For example, the core portion 11 includes at least one element, for example, two or more of the following elements as dopants: germanium (Ge), chlorine (Cl), fluorine (F), potassium (K), and sodium (Na). Herein, fluorine (F) is a dopant that lowers the refractive index of silica based glass. On the other hand, germanium (Ge), chlorine (Cl), potassium (K), and sodium (Na) are dopants that increase the refractive index of silica based glass. Meanwhile, the core portion 11 can be made of pure silica glass.

The side core layer 12 and the cladding portion 13 are made of silica based glass doped either only with fluorine (F) and chlorine (Cl), or only with fluorine (F), or only with chlorine (Cl). When the refractive index is adjusted using such dopants, not only the relationships Δ1>ΔClad>Δ2 and 0>Δ2 hold true, but an optimum range of the relative refractive-index differences Δ1, Δ2, and ΔClad can also be achieved as explained later. Meanwhile, the cladding portion 13 can be made of pure silica glass.

The primary layer 14a and the secondary layer 14b are made of a resin. The resin is, for example, an ultraviolet-curing resin. For example, an ultraviolet-curing resin is formed by blending a variety of resin materials and additive agents, such as an oligomer, a diluent monomer, a photopolymerization initiator, a silane coupling agent, a sensitizer, and a lubricant. As an oligomer, it is possible use a conventionally known material such as polyether-based urethane acrylate, epoxy acrylate, polyester acrylate, or silicon acrylate. As a diluent monomer, it is possible to use a conventionally known material such as a monofunctional monomer or a polyfunctional monomer. Meanwhile, the additive agents are not limited to the abovementioned materials, and it is possible to use a wide range of conventionally known additive agents that are used for an ultraviolet-curing resin.

The primary layer thickness representing the thickness of the primary layer 14a as well as the secondary layer thickness representing the thickness of the secondary layer 14b is equal to or greater than 5 μm.

The primary elastic modulus representing the modulus of elasticity of the primary layer 14a is smaller than the secondary elastic modulus representing the modulus of elasticity of the secondary layer 14b. The primary elastic modulus and the secondary elastic modulus are also called the Young's moduli. Those moduli can be achieved by adjusting the components or the manufacturing conditions of the resin. More particularly, the modulus of elasticity of the primary layer 14a and the secondary layer 14b can be adjusted based on: the type, the molecular weight, or the content of the oligomer in the material constituting the primary layer 14a and the secondary layer 14b; the type or the additive amount of the diluent monomer; the type or the content of other components; and the curing conditions such as the irradiation strength of the ultraviolet rays.

In the optical fiber 10 configured as explained above, the relative refractive-index difference Δ1 is equal to or greater than 0.23% and equal to or smaller than 0.30%; the relative refractive-index difference Δ2 is equal to or greater than -0.23% and equal to or smaller than - 0.08%; the difference (Δ1-Δ2) is equal to or greater than 0.36% and equal to or smaller than 0.53%; the ratio b/a is equal to or greater than 2 and equal to or smaller than 5; the core diameter 2a is equal to or greater than 11.5 μm and equal to or smaller than 14.5 μm; the primary layer thickness as well as the secondary layer thickness is equal to 5 μm; and the primary elastic modulus is smaller than the secondary elastic modulus. As a result, at the wavelength of 1550 nm, the effective core area Aeff is equal to or greater than 90 μm$^2$ and equal to or smaller than 150 μm$^2$. Moreover, at the wavelength of 1550 nm, the microbending loss is equal to or smaller than 1.0 dB/km. Thus, the characteristics of the optical fiber 10 having an expanded effective core area Aeff and a low microbending loss can be achieved in a suitable manner.

Given below is the explanation of the result of the study done by the present inventors for achieving an expanded effective core area Aeff and a low microbending loss.

(Suitable structural parameters)

Firstly, from among the structural parameters of the optical fiber 10 according to the first embodiment, the explanation is given about the relative refractive-index difference Δ1, the relative refractive-index difference Δ2, the core diameter 2a, and the core diameter 2b.

In order to achieve the optical fiber 10 having an expanded effective core area Aeff and a low microbending loss, regarding the structural parameters of the W-type refractive index profile and regarding the optical characteristics attributed to those structural parameters, the present inventors diligently carried out a study using simulation calculation. In the following study, the effective core area Aeff is a value at the wavelength of 1550 nm.

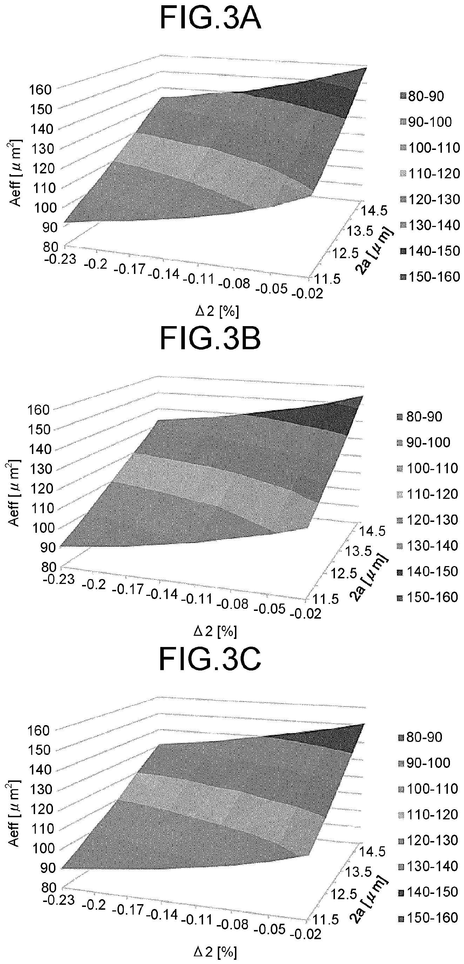

Firstly, the ratio b/a determined by the core diameter 2a and by the outer diameter 2b of the side core layer 12 was fixed to 3 (i.e., b/a=3) and the relative refractive-index difference Δ1 was changed from 0.23% to 0.30%; and the relationship between the relative refractive-index difference Δ2, the core diameter 2a, and the effective core area Aeff was examined. FIGS. 3A to 3C are diagrams illustrating examples of the relationship between the relative refractive-index difference Δ2, the core diameter 2a, and the effective core area Aeff. In FIG. 3A, the relative refractive-index difference Δ1 is set to 0.25%. In FIG. 3B, the relative refractive-index difference Δ1 is set to 0.27%. In FIG. 3C, the relative refractive-index difference Δ1 is set to 0.29%.

For example, as a result of comparing FIG. 3A with FIG. 3C, it can be understood that, when the relative refractive-index difference Δ1 increases, the effective core area Aeff tends to become smaller. Moreover, also in the case in which the relative refractive-index difference Δ1 is equal to 0.23% or 0.3%, there are times when the effective core area Aeff becomes equal to or greater than 90 $\mu$m$^2$ and equal to or smaller than 150 $\mu$m$^2$.

As illustrated in FIGS. 3A to 3C, as a result of examining, in a structured manner, the relationship between the relative refractive-index difference Δ2, the core diameter 2a, and the effective core area Aeff by changing the relative refractive-index difference Δ1 while keeping the ratio b/a fixed to a particular value; the following was understood: in order to satisfy the area of 90 $\mu$m$^2$ or more as the expanded effective core area Aeff over a wide range, it is desirable that the relative refractive-index difference Δ1 is equal to or greater than 0.23% and equal to or smaller than 0.30%, that the relative refractive-index difference Δ2 is equal to or greater than -0.23% and equal to or smaller than -0.02%, and that the core diameter 2a is equal to or greater than 11.5 $\mu$m.

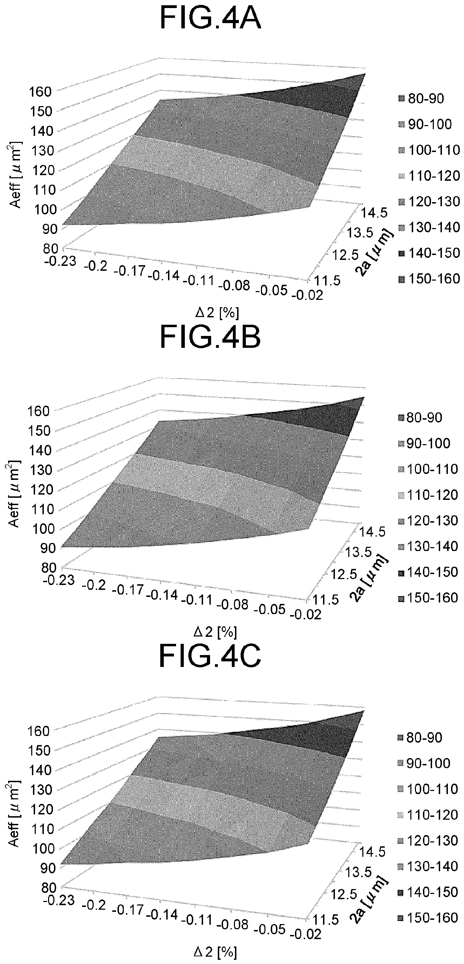

Subsequently, the relative refractive-index difference Δ1 was fixed to 0.27% and the ratio b/a was changed from 2 up to 4; and the relationship between the relative refractive-index difference Δ2, the core diameter 2a, and the effective core area Aeff was examined. FIGS. 4A to 4C are diagrams illustrating other examples of the relationship between the relative refractive-index difference Δ2, the core diameter 2a, and the effective core area Aeff. In FIG. 4A, the ratio b/a is equal to 2. In FIG. 4B, the ratio b/a is equal to 3. In FIG. 4C, the ratio b/a is equal to 4.

As illustrated in FIGS. 4A to 4C, as a result of examining, in a structured manner, the relationship between the relative refractive-index difference Δ2, the core diameter 2a, and the effective core area Aeff by changing the ratio b/a while keeping the relative refractive-index difference Δ1 fixed to a particular value; the following was understood: in order to satisfy the area of 90 $\mu$m$^2$ or more as the expanded effective core area Aeff over a wide range, unlike the case of the relative refractive-index difference Δ1, when the ratio b/a is equal to or greater than 2, there is less impact of the value of the ratio b/a on the effective core area Aeff. Moreover, it was also understood that, also when the ratio b/a is equal to 5, the effective core area Aeff of 90 $\mu$m$^2$ or more could be secured in a stable manner.

From the results given above, it was understood that the effective core area Aeff of 90 $\mu$m$^2$ or more can be secured in a stable manner when the relative refractive-index difference Δ1 is equal to or greater than 0.23% and equal to or smaller than 0.30%; when the relative refractive-index difference Δ2 is equal to or greater than -0.23% and equal to or smaller than -0.02%; when the core diameter 2a is equal to or greater than 11.5 $\mu$m; and when the ratio b/a is equal to or greater than 2.

However, generally, an expansion of the effective core area Aeff leads to an increase in the microbending loss. In that regard, the relationship between the structural parameters of the optical fiber 10 and the microbending loss was examined. The microbending loss represents a value at the wavelength of 1550 nm. In the examination of the microbending loss, simulation calculation based on the following nonpatent literature was implemented: "Tamas Mihalffy et al., Combined Mechanical-Optical Simulation to Predict Microbending Loss of Single Mode Fibers, OECC 2019, WP4-C1".

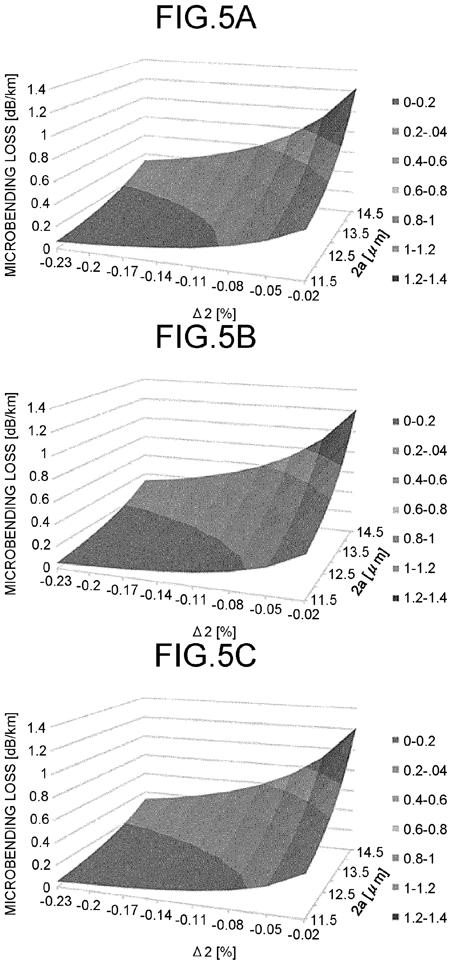

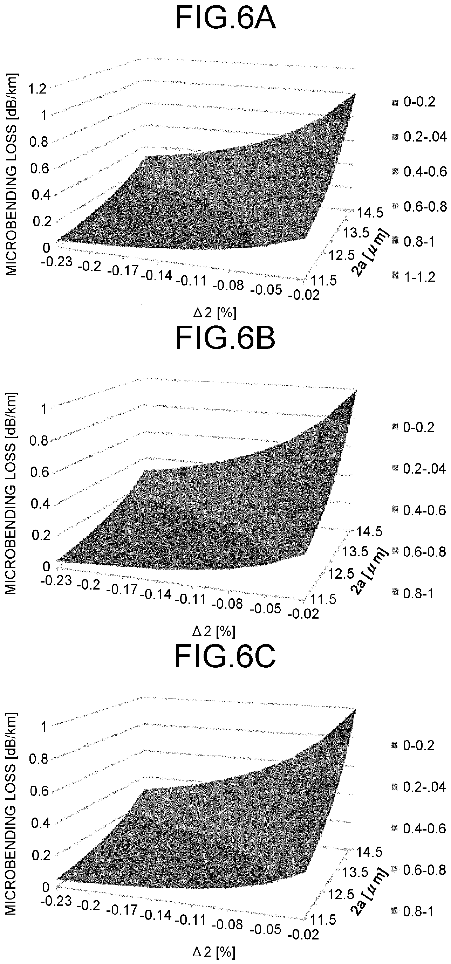

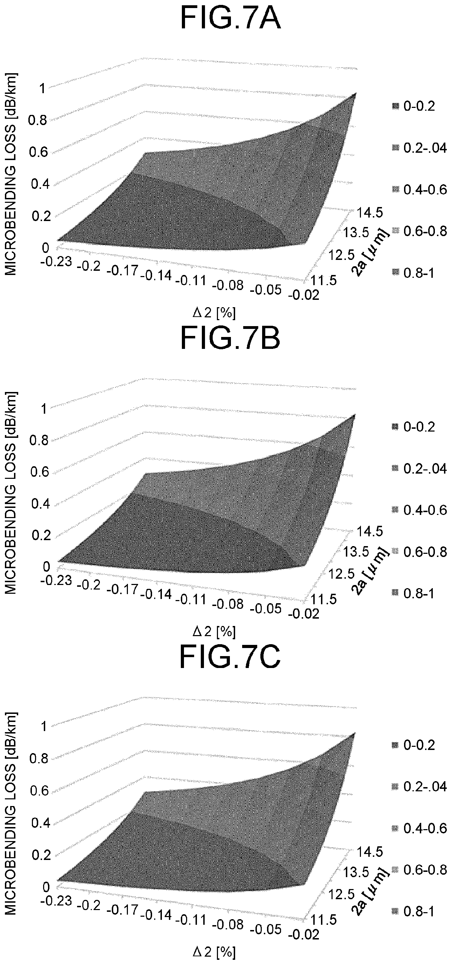

FIGS. 5A to 5C, FIGS. 6A to 6C, and FIGS. 7A to 7C are diagrams representing examples of the relationship between the relative refractive-index difference Δ2, the core diameter 2a, and the microbending loss. In the examples illustrated in FIGS. 5, the relative refractive-index difference Δ1 is fixed to 0.25%, and the ratio b/a is changed from 2 up to 4. More particularly, in FIG. 5A, the ratio b/a is set to 2. In FIG. 5B, the ratio b/a is set to 3. In FIG. 5C, the ratio b/a is set to 4. In the examples illustrated in FIGS. 6A to 6C, the relative refractive-index difference Δ1 is fixed to 0.27%, and the ratio b/a is changed from 2 up to 4. More particularly, in FIG. 6A, the ratio b/a is set to 2. In FIG. 6B, the ratio b/a is set to 3. In FIG. 6C, the ratio b/a is set to 4. In the examples illustrated in FIGS. 7A to 7C, the relative refractive-

index difference ∆1 is fixed to 0.29%, and the ratio b/a is changed from 2 up to 4. More particularly, in FIG. 7A, the ratio b/a is set to 2. In FIG. 7B, the ratio b/a is set to 3. In FIG. 7C, the ratio b/a is set to 4.

For example, as a result of comparing FIG. 5A with FIG. 5C, it can be understood that, when the ratio b/a increases, the microbending loss tends to become smaller. Moreover, as a result of comparing FIG. 5A with FIG. 7A, it can be understood that, when the relative refractive-index difference ∆1 increases, the microbending loss tends to become smaller.

As a result of referring to FIGS. 5A to 5C, FIGS. 6A to 6C, and FIGS. 7A to 7C; it is believed that the microbending loss is impacted by the core diameter, the relative refractive-index difference ∆2, the relative refractive-index difference ∆1, and the ratio b/a.

As illustrated in FIGS. 5A to 5C, FIGS. 6A to 6C, and FIGS. 7A to 7C, the microbending loss was examined, in a structured manner, by applying, with respect to all structural parameters, the condition in which a particular structural parameter is fixed to a particular value and other structure parameters are changed; and the optimum structural parameter range was obtained in which the microbending loss is reliably held down to be equal to or smaller than 1.0 dB/km. As a result, firstly, it was understood that, when the core diameter 2a exceeds 14.5 µm, it becomes difficult to hold down the microbending loss to be equal to or smaller than 1.0 dB/km. Similarly, it was understood that, when the relative refractive-index difference ∆2 exceeds -0.08%, it becomes difficult to hold down the microbending loss to be equal to or smaller than 1.0 dB/km. On the other hand, it was understood that, when the relative refractive-index difference ∆1 is equal to or greater than 0.23% and equal to or smaller than 0.3% and when the ratio b/a is equal to or greater than 2, the microbending loss can be held down to be equal to or smaller than 1.0 dB/km without difficulty.

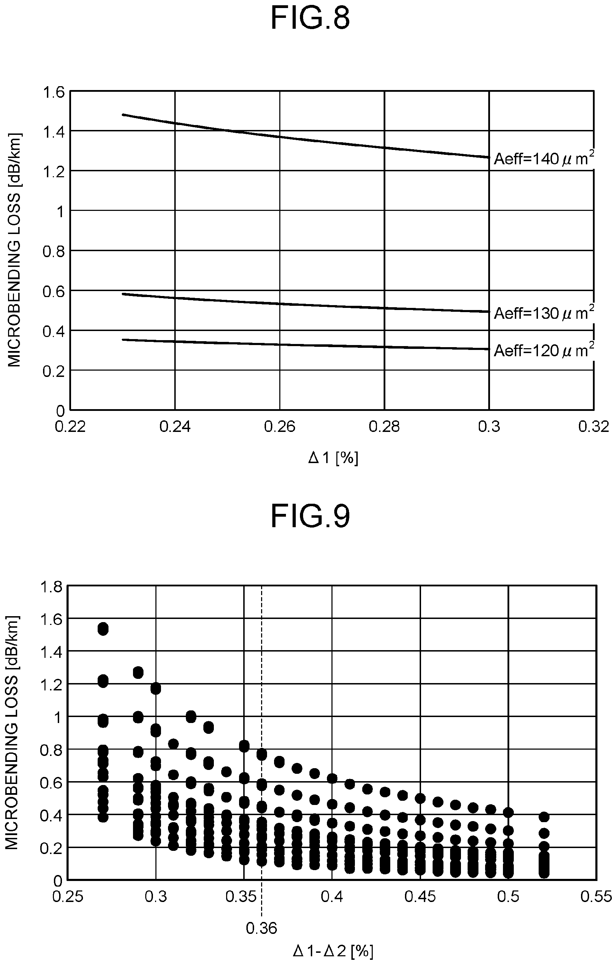

FIG. 8 is a diagram illustrating an exemplary relationship between the relative refractive-index difference ∆1 and the average value of the microbending loss. In FIG. 8 is illustrated the relationship between the relative refractive-index difference ∆1 and the average value of the microbending loss at the wavelength of 1550 nm when the structural parameters are set within a predetermined range and when the effective core area Aeff at the wavelength of 1550 nm is set to 120 µm², 130 µm², and 140 µm². Herein, the predetermined range is the range in which the relative refractive-index difference ∆2 is equal to or greater than -0.23% and equal to or smaller than -0.08% and in which the ratio b/a is equal or greater than 2 and equal to or smaller than 4. As a result of performing the examination as illustrated in FIG. 8, it is understood that, particularly when the effective core area Aeff increases, if the relative refractive-index difference ∆1 is smaller than 0.23%, the microbending loss increases in an exponential manner thereby making it difficult to stably keep the microbending loss equal to or smaller than 1 dB/km.

Subsequently, as a result of the diligent study carried out by the present inventors, it was understood that the microbending loss is significantly dependent on the value of the difference (∆1-∆2). FIG. 9 is a diagram illustrating an exemplary relationship between the difference (∆1-∆2) and the microbending loss. As illustrated in FIG. 9, it was understood that, as the difference (∆1-∆2) becomes smaller, the microbending loss increases. According to the examination performed by the present inventors, in order to stably hold down the microbending loss to be equal to or smaller than 1 dB/km, it is desirable that the difference (∆1-∆2) is equal to or greater than 0.36%. For example, if the difference (∆1-∆2) is equal to or greater than 0.36%, then the microbending loss is equal to or smaller than 0.8 dB/km, which is smaller than 1 dB/km by 20% or more. On the other hand, it was understood that, as the difference (∆1-∆2) increases, the effective core area Aeff tends to become smaller. Moreover, it was understood that, in order to reliably ensure that the effective core area Aeff is equal to or greater than 90 µm², it is desirable that the difference (∆1-∆2) is equal to or smaller than 0.53%. That is, it was understood that the difference (∆1-∆2) is desirably equal to or greater than 0.36% and desirably equal to or smaller than 0.53%.

As a result of performing such exhaustive examination, regarding the configuration of the core portion 11, the side core layer 12, and the cladding portion 13, the following was understood: if the relative refractive-index difference ∆1 is equal to or greater than 0.23% and equal to or smaller than 0.30%, if the relative refractive-index difference ∆2 is equal to or greater than -0.23% and equal to or smaller than -0.08%, if the difference (∆1-∆2) is equal to or greater than 0.36% and equal to or smaller than 0.53%, if the ratio b/a is equal to or greater than 2 and equal to or smaller than 5, and if the core diameter 2a is equal to or greater than 11.5 µm and equal to or smaller than 14.5 µm; then, while the effective core area Aeff at the wavelength of 1550 nm is expanded within the range equal to or greater than 90 µm² and equal to or smaller than 150 µm², a low microbending loss equal to or smaller than 1.0 dB/km can also be achieved at the wavelength of 1550 nm.

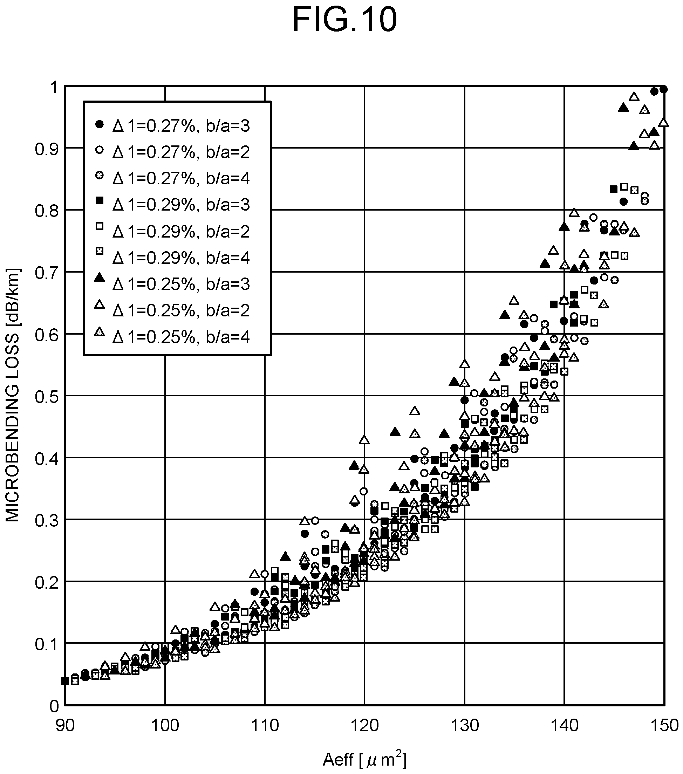

FIG. 10 is a diagram illustrating an exemplary relationship of the effective core area Aeff, in various combinations of the relative refractive-index difference ∆1 and the ratio b/a, with the microbending loss. According to FIG. 10, a trend was confirmed in which, for the same effective core area Aeff, the microbending loss can be reduced if the relative refractive-index difference ∆1 is large or if the ratio b/a is large.

Meanwhile, regarding the cutoff wavelength of the optical fiber 10, it is a known fact that the cutoff wavelength has strip length dependency; and, although there is no restriction, if the cable cutoff wavelength (λcc) measured for the strip length of 22 m is equal to or lower than 1530 nm, it is desirable because the optical fiber 10 can be put to practical use as a single mode optical transmission line in the C band (for example, between 1530 nm to 1565 nm). Meanwhile, according to the exhaustive examination performed by the present inventors, it was understood that, if the core diameter 2a is equal to or smaller than 14.5 $\mu$m, it becomes easier to set the cable cutoff wavelength ($\lambda$cc) to be equal to or lower than 1530 nm.

(Preferable characteristics of coating layer)

In the optical fiber 10, as far as the microbending loss is concerned, not only the configuration of the core portion 11, the side core layer 12, and the cladding portion 13 of the glass optical fiber is important, but the characteristics of the coating layer 14 made of resin also assume importance. Regarding the characteristics of the coating layer 14, the present inventors carried out comprehensive testing involving experiments, and performed optimization. As a result, the coating layer 14 has a two-layered structure including the primary layer 14a, which encloses the outer periphery of the cladding portion 13, and the secondary layer 14b, which encloses the outer periphery of the primary layer 14a. The primary layer 14a is made of a soft material having the primary elastic modulus to be lower than the secondary elastic modulus, and the secondary layer 14b is made of a harder material. Moreover, the primary layer thickness as well as the secondary layer thickness is equal to or greater than 5 $\mu$m. Accordingly, it was understood that the microbending loss characteristic equal to or smaller than 1.0 dB/km is maintained due to the comprehensive effect of the characteristics of the core portion 11, the side core layer 12, and the cladding portion 13. Meanwhile, even if the primary layer thickness is equal to or smaller than 60 $\mu$m, there is no change in the characteristics. Hence, considering the material cost, it is preferable to have the primary layer thickness equal to or smaller than 60 $\mu$m. Similarly, even if the secondary layer thickness is equal to or smaller than 60 $\mu$m, there is no change in the characteristics. Hence, considering the material cost, it is desirable to have the secondary layer thickness equal to or smaller than 60 $\mu$m.

Moreover, it is preferable that the ratio of the secondary layer thickness with respect to the primary layer thickness is smaller than 1. If the ratio is smaller than 1 (i.e., if the primary layer thickness is greater than the secondary layer thickness), then the secondary layer 14b becomes relatively flexible and the primary layer 14a has more mobility. Hence, it becomes possible to efficiently hold down an increase in the loss attributed to microbending.

Meanwhile, in order to ensure appropriate preservation of the glass optical fiber in the optical fiber 10, the primary elastic modulus is desirably equal to or greater than 0.2 MPa and equal to or smaller than 3 MPa; and is more desirably equal to or smaller than 1.0 MPa and is still more desirably equal to or greater than 0.3 MPa and equal to or smaller than 0.6 MPa. Moreover, in order to secure rigidity of the secondary layer 14b, the secondary elastic modulus is desirably equal to or greater than 5.0 MPa and equal to or smaller than 2000 MPa; and is more desirably equal to or greater than 500 MPa and is still more desirably equal to or greater than 600 MPa and equal to or smaller than 800 MPa.

Furthermore, in order to ensure appropriate preservation of the glass optical fiber in the optical fiber 10, the breaking elongation of the secondary layer 14b is desirably equal to or greater than 2.5% and equal to or smaller than 80%.

In the present written description, the primary elastic modulus is defined to be measured according to the following method. Firstly, using a commercially available stripper, the primary layer and the secondary layer of the intermediate portion of a sample optical fiber is stripped over a few mm. Then, one end of the optical fiber at which the coating layer is intact is fixed onto a glass slide using an adhesive agent, and a load F is applied to the other end of the optical fiber at which the coating layer is intact. In that state, at the borderline between the portion in which the coating layer is stripped and the portion in which the coating layer is intact, a displacement $\delta$ of the primary layer is read in a microscope. Subsequently, the load F is sequentially varied to 10 gf, 20 gf, 30 gf, 50 gf, and 70 gf (i.e., 98 mN, 196 mN, 294 mN, 490 mN, and 686 mN), and a graph of the displacement $\delta$ with respect to the load F is created. Then, using the slope obtained from the graph and using the equation given below, the primary elastic modulus is calculated. The calculated primary elastic modulus is equivalent to In-situ Modulus (ISM), and is hereinafter referred to as P-ISM.

$$P\text{-}ISM = (3F/\delta) * (1/2\pi l) * \ln(DP/DG)$$

The unit of the primary elastic modulus P-ISM is [MPa]. Moreover, F/$\delta$ represents the slope indicated by the graph of the displacement ($\delta$) [$\mu$m] with respect to the load (F) [gf]. Furthermore, l represents the sample length (for example, 10 mm). Moreover, DP/DG represents the ratio of the outer diameter (DP) [$\mu$m] of the primary layer and the outer diameter (DG) [$\mu$m] of the cladding portion of the optical fiber. Thus, in the case of calculating the primary elastic modulus P-ISM using the F, displacement $\delta$, and the sample length l according to the equation given above, it is necessary to perform predetermined unit conversion. Meanwhile, the outer diameter of the primary layer and the outer diameter of the cladding portion can be measured by observing the cross-sectional surface of the optical fiber, which is cut using a fiber cutter, in a microscope.

The secondary elastic modulus is defined to be measured according to the following method. Firstly, an optical fiber is immersed in liquid nitrogen and the coating is stripped using a stripper so as to create a sample of only the coating after the glass optical fiber has been pulled out from the optical fiber; and the end portions of the sample are fixed to an aluminum plate using an adhesive agent. Then, in an inert atmosphere having the temperature of 23 °C and the relative humidity of 50%, the aluminum plate portion is checked using a Tensilon universal tensile tester. Subsequently, the sample is pulled at the gauge line interval of 25 mm and the tension rate of 1 mm/min, and the tensile force at the elongation of 2.5% is measured to calculate the secondary elastic modulus. The secondary elastic modulus is equivalent to, what is called, the 2.5% secant modulus and is hereinafter referred to as S-ISM.

Meanwhile, the breaking elongation of the secondary layer is defined to be measured according to the following method. Firstly, a sample identical to the sample at the time of measuring the secondary elastic modulus is prepared, and the end portions of the sample are fixed to an aluminum plate using an adhesive agent. Then, in an inert atmosphere having the temperature of 23 °C and the relative humidity of 50%, the aluminum plate portion is checked using a Tensilon universal tensile tester. Subsequently, the sample is pulled at the gauge line interval of 25 mm and the tension rate of 50 mm/min, and the breaking elongation is measured.

(Manufacturing method)

As the manufacturing method of the optical fiber 10, it is desirable that a known manufacturing method is implemented to manufacture an optical fiber in such a way that the abovementioned structural parameters and the characteristics of the resin layer are satisfied. More particularly, the optical fiber 10 can be easily manufactured as follows: an optical fiber base material is manufactured according to a known method such as the vapor axial deposition (VAD) method, the outside vapor deposition (OVD) method, the modified chemical vapor deposition (MCVD) method, or the plasma CVD method. Then, from the optical fiber base material, a glass optical fiber is drawn in a fiber drawing furnace; resin is applied to the drawn glass optical fiber; and the applied resin is hardened by bombarding it with ultraviolet light.

Meanwhile, regarding a dopant such as germanium (Ge), fluorine (F), potassium (K), or sodium (Na); a gas including a dopant is used at the time of soot synthesis, so that the dopant can be added to the optical fiber base material. As far as chlorine (Cl) is concerned, the chlorine gas that is used during the draining process is made to remain, so that chlorine (Cl) can be added to the optical fiber base material. As far as fluorine (F) is concerned, the fluorine gas is circulated in a vitrification sintering configuration, so that fluorine (F) can be added to the optical fiber base material.

(Working example)

As a working example, an optical fiber base material was drawn using the VAD method, and optical fibers assigned with sample numbers 1 to 5 and having the W-type refractive index profile were manufactured. In order to achieve the W-type refractive index profile, the following two methods were used. In the first method, the core portion was made of silica based glass having germanium (Ge) added thereto for an increased refractive index, and the cladding portion was made of pure silica glass or made of silica based glass added with only a small amount of dopant. In the second method, the core portion was made of pure silica glass or made of silica based glass having fluorine (F) added thereto for a lowered refractive index, and the cladding portion was made of silica based glass added with a greater amount of fluorine (F) as compared to the core portion so that the refractive index was still lower. The diameter (cladding diameter) of each glass optical fiber was kept at 125 $\mu$m. Moreover, the coating portion was kept at approximately 250 $\mu$m or approximately 200 $\mu$m.

Subsequently, the optical characteristics of the optical fibers having the sample numbers 1 to 5 was measured. As far as the method for measuring the microbending loss is concerned, it is possible to think of various methods. In the present written description, the value of the microbending loss is defined as the difference between the following two types of transmission loss: the transmission loss of the target optical fiber for measurement in a state A in which single-layer winding of the optical fiber having the length equal to or greater than 400 m was performed under the tension of 100 gf and in a nonoverlapping manner on a large bobbin having a sandpaper of the thread size #1000 wound around it; and the transmission loss of an optical fiber in a state B in which the winding of the optical fiber having the same length as the length in the state A is performed at the same tension as the tension in the state A on a bobbin same as the bobbin in the state A but without having a sandpaper wound around it. Herein, the transmission loss of the optical fiber in the state B does not include the microbending loss, and is believed to be the transmission loss peculiar to the optical fiber itself. Meanwhile, this measurement method is similar to the fixed-diameter drum method defined in JIS C6823:2010. Moreover, this measurement method is also called a sandpaper method. Furthermore, in this measurement method, since the transmission loss is measured at the wavelength of 1550 nm, the microbending loss mentioned below also represents a value at the wavelength of 1550 nm. Thus, in the following explanation too, the microbending loss represents a value at the wavelength of 1550 nm.

Regarding each sample; the structural parameters, the resin layer characteristics, and the optical characteristics are illustrated in Table 1 given below. Herein, "P diameter" represents the outer diameter of the primary layer, and "S diameter" represents the outer diameter of the secondary layer (i.e., the outer diameter of the coating layer). Moreover, "MBL" implies the microbending loss measured according to the sandpaper method. Herein, the microbending loss MBL represents the average value obtained by performing the measurement of each sample for three or more times. Those measured values were stably obtained to be within $\pm 10$ of the average value. Meanwhile, the effective core area Aeff and the microbending loss MBL represent values at the wavelength of 1550 nm.

Regarding the sample numbers 1 to 5, the primary layer thicknesses were 35.5 $\mu$m, 21.5 $\mu$m, 33.5 $\mu$m, 36.0 $\mu$m, and 35.5 $\mu$m, respectively. Moreover, regarding the sample numbers 1 to 5, the secondary layer thicknesses were 26.5 $\mu$m, 20.0 $\mu$m, 27.5 $\mu$m, 26.5 $\mu$m, and 27.5 $\mu$m, respectively.

As illustrated in Table 1, in each sample, the effective core area Aeff was confirmed to be equal to or greater than 90 $\mu$m$^2$ and equal to or smaller than 150 $\mu$m$^2$, and the microbending loss MBL was confirmed to be equal to or smaller than 1 dB/km. Thus, the characteristics were confirmed to be excellent. Moreover, in each sample, the other optical characteristics such as the cable cutoff wavelength ($\lambda$cc) was confirmed to be compatible with ITU-T G.654. Thus, the characteristics were confirmed to be excellent. Although being compatible with ITU-T G.654 is not a necessary condition, it is desirable to have that compatibility from the perspective of general versatility of the optical fibers in the working example.

Table 1

| Sample No. | $\Delta$1 [%] | $\Delta$2 [%] | $\Delta$1-$\Delta$2 [%] | b/a | Core diameter [$\mu$m] | P diameter [$\mu$m] | S diameter [$\mu$m] | P-ISM [MPa] | S-ISM [MPa] | Aeff [$\mu$m$^2$] |
|---|---|---|---|---|---|---|---|---|---|---|
| 1 | 0.25 | -0.14 | 0.39 | 2.9 | 13.2 | 196 | 249 | 0.30 | 600 | 119 |
| 2 | 0.26 | -0.13 | 0.39 | 3.1 | 13.5 | 168 | 201 | 0.60 | 1,800 | 122 |
| 3 | 0.24 | -0.14 | 0.38 | 3.3 | 13.8 | 192 | 247 | 0.40 | 1,000 | 127 |
| 4 | 0.24 | -0.16 | 0.40 | 3.6 | 13.4 | 197 | 250 | 0.30 | 1,800 | 123 |
| 5 | 0.26 | -0.14 | 0.40 | 3.7 | 12.5 | 196 | 251 | 0.35 | 1,000 | 111 |

When the W-type refractive-index profile was implemented according to the first method explained above, the transmission loss at the wavelength of 1550 nm was equal to 0.20 dB/km. Similarly, when the W-type refractive-index profile was implemented according to the second method explained above, the transmission loss at the wavelength of 1550 nm was equal to 0.18 dB/km. Thus, in both cases, the characteristics were confirmed to be excellent. Moreover, between the first method and the second method, no differences were found in the optical characteristics other than the transmission loss.

Meanwhile, at the time of measuring the microbending loss, instead of measuring the transmission loss in the state B in which an optical fiber having a predetermined length is wound at a predetermined tension on the same bobbin but without having a sandpaper wound around it, the transmission loss was measured when an optical fiber was not wound around a bobbin but was kept as a winding bundle (treated as a state C). It was found that there was almost no difference in the value of the transmission loss when measured in the state B and the state C. Hence, at the time of measuring the microbending loss, regardless of whether the state B or the state C is used, it is possible to think that verification of the microbending loss can be performed and the reproducibility is excellent.

Meanwhile, the connection characteristics and the cable characteristics of the optical fibers having the sample numbers 1 to 5 were also confirmed, and they did not indicate any particular practical problem. For example, with reference to the fusion characteristics of, what is called, a standard single mode optical fiber (SMF) conforming to the G.652 standard, under the condition that there is no issue in regard to the mechanical strength of the connection, it was confirmed that a low connection loss equal to or smaller than 0.1 dB can be stably obtained.

(Second embodiment, third embodiment)

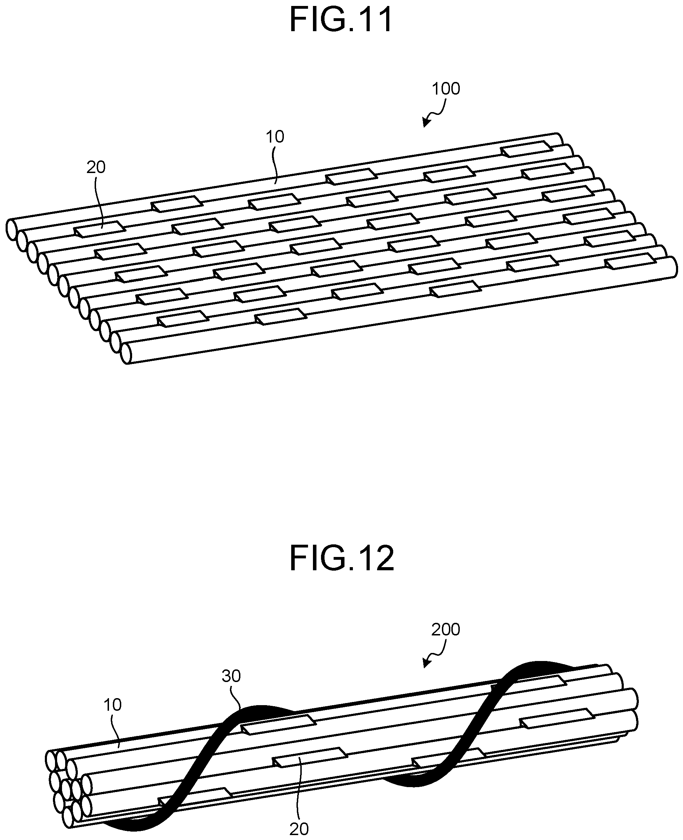

FIG. 11 is a schematic diagram illustrating an optical fiber tape core wire according to a second embodiment. In an optical fiber tape core wire 100, a plurality of optical fibers 10 according to the first embodiment is arranged in parallel, and adjacent optical fibers 10 are intermittently bonded at a plurality of positions in the longitudinal direction using an adhesive agent 20. Meanwhile, the positions in the longitudinal direction of the adhesive agent 20 used for bonding a particular first optical fiber 10 and the adjacent second optical fiber 10 are mutually different than the positions in the longitudinal direction of the adhesive agent 20 used for bonding the first optical fiber 10 and a third optical fiber 10 that is adjacent to the first optical fiber 10 on the opposite side of the second optical fiber 10. The optical fiber tape core wire 100 is also called an intermittent-bonding-type ribbon core wire or a rollable ribbon core wire.

FIG. 12 is a schematic diagram illustrating an optical fiber tape core wire according to a third embodiment. An optical fiber tape core wire 100a is formed by rolling the optical fiber tape core wire 100 according to the second embodiment and then winding a bundle tape 30 in a helical manner along the longitudinal direction of the optical fiber tape core wire 100.

The optical fiber tape core wires 100 and 100a inherit the advantages of the optical fiber 10, such as having an expanded effective core area and a low microbending loss.

Moreover, as a result of rolling the optical fiber tape core wire 100 to form the optical fiber tape core wire 100b, it becomes possible to achieve the state of high-density mounting of the optical fibers 10. On the other hand, as a result of spreading the optical fiber tape core wire 100a to form the optical fiber tape core wire 100, the task of fusion splicing of the optical fiber tape core wires 100 can be performed in a comparatively shorter period of time using a known fusion splicer for optical fiber tape core wires. That enhances the workability.

(Fourth embodiment)

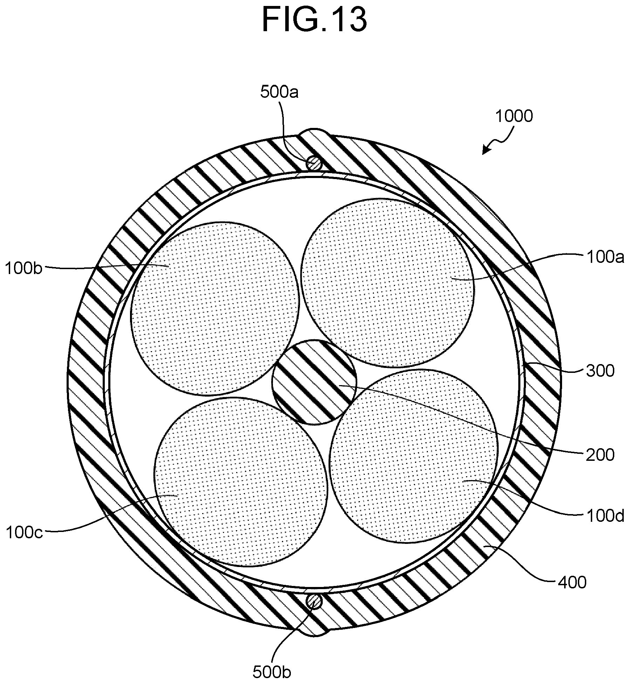

FIG. 13 is a schematic cross-sectional view of an optical fiber cable according to a fourth embodiment. An optical fiber cable 1000 includes a tension member 200 positioned at the center; optical fiber tape core wires 100a, 100b, 100c, and 100d disposed to enclose the outer periphery of the tension member 200; a water-absorbing non-woven fabric 300 that collectively enwraps the tension member 200 and the optical fiber tape core wires 100a, 100b, 100c, and 100d; and a sheath 400 that encloses the outer periphery of the non-woven fabric 300. Moreover, inside the sheath 400, rip cords 500a and 500b are disposed along the longitudinal direction and in the vicinity of the non-woven fabric 300.

The optical fiber tape core wire 100a is as illustrated in FIG. 12. In an identical manner to the optical fiber tape core wire 100a, in each of the optical fiber tape core wires 100b, 100c, and 100d; a rollable ribbon core wire including a plurality of optical fibers 10 is rolled and is united using a bundle tape. Thus, the optical fiber tape core wires 100b, 100c, and 100d can be same as the optical fiber tape core wire 100a. The tension member 200, the non-woven fabric 300, and the sheath 400 have a known configuration adopted in an optical fiber cable. Hence, that explanation is not given. Meanwhile, a sheath is also called an envelope.

The optical fiber cable 1000 inherits the advantages of the optical fiber 10, such as having an expanded effective core area and a low microbending loss. That is, in the optical fiber cable 1000, even when cabling of the optical fiber 10 is performed, any increase in the transmission loss attributed to an increase in the microbending loss is held down.

As explained earlier, the optical fiber according to the embodiments of the present invention can be widely used as an optical fiber constituting an optical fiber tape core wire or as an optical fiber housed in an optical fiber cable. Moreover, an optical fiber cable or an optical fiber tape core wire configured as a result of including the optical fiber according to the embodiments of the present invention inherits the advantages of the optical fiber. Thus, the embodiments of the present invention enable provision of an optical fiber cable or an optical fiber tape core wire in which an optical fiber having an expanded effective core area and a low microbending loss is included.

The configuration of the optical fiber cable according to the embodiments of the present invention is not limited to the configuration illustrated in the drawings. Alternatively, the optical fiber cable can have a typically known configuration in which the optical fiber according to the embodiments of the present invention is included and a sheath is coated on the outer periphery of the optical fiber. Thus, there is no particular restriction on the configuration. For example, any arbitrary configuration can be adopted, such as a configuration of an optical fiber cable in which: an optical fiber is included; tension members are arranged on both sides of the optical fiber in parallel to the longitudinal direction of the optical fiber; and the outer periphery of the optical fiber and the tension members is collectively covered by a sheath. Alternatively, for example, it is also possible to have a configuration of, what is called, an optical fiber drop cable in which a pair of notches is formed on both sides of an optical fiber cable and across the longitudinal direction, and a supporting member having a supporting wire built-in is disposed as may be necessary.

Meanwhile, not only the configuration of the optical fiber cable is not limited to the configuration explained above, it is also possible to freely select: the type of material and the thickness of the sheath; the number and the size of the optical fibers; and the type, the number, and the size of the tension members. Moreover, regarding the outer diameter and the cross-sectional shape of the optical fiber cable, regarding the shape and the size of the notches, and regarding the presence or absence of notches too; the selection can be made freely.

Moreover, regarding the configuration of an optical fiber tape core wire including a plurality of optical fibers, it is possible to adopt, without any particular restriction, a known configuration of an optical fiber tape core wire that includes a parallel arrangement of a plurality of optical fibers according to the embodiments of the present invention, and the optical fibers are coupled or covered using a predetermined taping material. In the optical fiber tape core wire, in addition to including the rollable ribbon core wire explained earlier, a flat ribbon core wire is also included. Thus, as a configuration of an optical fiber tape core wire, for example, a plurality of optical fibers can be arranged in parallel, and a joining section made of an ultraviolet-curing resin can be used to couple the optical fibers in an integrated manner. The number of optical fibers (core count) in an optical fiber tape core wire can be set to, for example, 4, 8, 12, or 24. Thus, regarding the configuration of the optical fiber tape core wire and regarding the number of optical fibers, the selection can be made freely without any particular restriction.

In the embodiments described above, regarding the configuration of the coating layer of an optical fiber, it is explained that a primary layer is formed around the optical fiber, and a secondary layer is formed around the primary layer. In addition, a colored layer can also be formed around the secondary layer. Such a configuration is also called an optical fiber colored core wire. In an optical fiber colored core wire configured by forming a colored layer around the secondary layer; an ultraviolet-curing resin, which is used as a constituent material in the primary layer and the secondary layer, is used as the constituent material. For example, a variety of additive agents, such as an oligomer, a diluent monomer, a photoinitiator, a sensitizer, a pigment, and a lubricant can be preferably used. Meanwhile, it is alternatively possible to color the secondary layer, and to use the colored secondary layer as the outermost layer of the optical fiber colored core wire. In the case of coloring the secondary layer, a coloring agent having a mix of a pigment and a lubricant can be added to the secondary layer, so that a colored secondary layered is formed. In the colored secondary layer, the content of the coloring agent can be appropriately decided according to the content of the pigment in the coloring agent or according to the type of other elements such as the ultraviolet-curing resin. Other than that, the specific configurations and shapes at the time of implementation of the present invention can be varied within the scope of the present invention.

Meanwhile, the present invention is not limited by the embodiments described above. That is, although the present invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

Industrial Applicability

The present invention can be used in an optical fiber, an optical fiber tape core wire, and an optical fiber cable.

Reference Signs List

10 optical fiber
11 core portion
12 side core layer
13 cladding portion
14 coating layer
14a primary layer
14b secondary layer
20 adhesive agent
30 bundle tape
100, 100a, 100b, 100c, 100d optical fiber tape core wire
200 tension member
300 non-woven fabric
400 sheath
500a, 500b rip cord
P1, P2, P3 profile

Claims

1. An optical fiber comprising:

a core portion made of glass;
a side core layer made of glass and configured to enclose an outer periphery of the core portion;
a cladding portion made of glass and configured to enclose an outer periphery of the side core layer; and
a coating layer including

a primary layer made of resin and configured to enclose an outer periphery of the cladding portion, and
a secondary layer made of resin and configured to enclose an outer periphery of the primary layer, wherein

a relationship $\Delta 1 > \Delta Clad > \Delta 2$ and a relationship $0 > \Delta 2$ are satisfied where

Δ1 represents relative refractive-index difference of average maximum refractive index of the core portion with respect to average refractive index of the cladding portion,

Δ2 represents relative refractive-index difference of average refractive index of the side core layer with respect to average refractive index of the cladding portion, and

ΔClad represents relative refractive-index difference of average refractive index of the cladding portion with respect to refractive index of pure silica glass,

the relative refractive-index difference Δ1 is equal to or greater than 0.23% and equal to or smaller than 0.30%,

the relative refractive-index difference Δ2 is equal to or greater than -0.23% and equal to or smaller than - 0.08,

difference (Δ1-Δ2) is equal to or greater than 0.36% and equal to or smaller than 0.53%,

a ratio b/a is equal to or greater than 2 and equal to or smaller than 5 when the core portion has core diameter 2a and when the side core layer has an outer diameter 2b,

the core diameter 2a is equal to or greater than 11.5 $\mu$m and equal to or smaller than 14.5 $\mu$m,

an effective core area at wavelength of 1550 nm is equal to or greater than 90 m$^2$ and equal to or smaller than 150 $\mu$m$^2$,

a primary layer thickness representing thickness of the primary layer and a secondary layer thickness representing thickness of the secondary layer are equal to or greater than 5 $\mu$m,

a primary elastic modulus representing modulus of elasticity of the primary layer is smaller than a secondary elastic modulus representing modulus of elasticity of the secondary layer, and

microbending loss at wavelength of 1550 nm is equal to or smaller than 1.0 dB/km.

2. The optical fiber according to claim 1, wherein a ratio of the secondary layer thickness with respect to the primary layer thickness is smaller than 1.

3. The optical fiber according to claim 1 or 2, wherein

the primary elastic modulus is equal to or greater than 0.2 MPa and equal to or smaller than 3.0 MPa, and

the secondary elastic modulus is equal to or greater than 5.0 MPa and equal to or smaller than 2000 MPa.

4. The optical fiber according to claim 3, wherein

the primary elastic modulus is equal to or greater than 0.2 MPa and equal to or smaller than 1.0 MPa, and

the secondary elastic modulus is equal to or greater than 500 MPa and equal to or smaller than 2000 MPa.

5. The optical fiber according to claim 4, wherein

the primary elastic modulus is equal to or greater than 0.3 MPa and equal to or smaller than 0.6 MPa, and

the secondary elastic modulus is equal to or greater than 600 MPa and equal to or smaller than 1800 MPa.

6. The optical fiber according to any one of claims 1 to 5, wherein the microbending loss represents a value measured according to sandpaper method.

7. The optical fiber according to any one of claims 1 to 6, wherein breaking elongation of the secondary layer is equal to or greater than 2.5% and equal to or smaller than 80%.

8. The optical fiber according to any one of claims 1 to 7, wherein cutoff wavelength is equal to or smaller than 1530 nm.

9. The optical fiber according to any one of claims 1 to 8, wherein the primary layer thickness and the secondary layer thickness are equal to or greater than 5 $\mu$m and equal to or smaller than 60 $\mu$m.

10. An optical fiber tape core wire comprising a plurality of the optical fiber according to any one of claims 1 to 9.

11. An optical fiber cable comprising the optical fiber according to any one of claims 1 to 9.

# FIG.1

# FIG.2

# FIG.3A

# FIG.3B

# FIG.3C

## FIG.4A

## FIG.4B

## FIG.4C

# FIG.5A

# FIG.5B

# FIG.5C

# FIG.6A

# FIG.6B

# FIG.6C

# FIG.7A

# FIG.7B

# FIG.7C

# FIG.8

# FIG.9

# FIG.10

# FIG.11

# FIG.12

# FIG.13

## INTERNATIONAL SEARCH REPORT

| International application No. |
|---|
| **PCT/JP2022/001856** |

| A. CLASSIFICATION OF SUBJECT MATTER |
|---|
| *G02B 6/036*(2006.01)i; *G02B 6/44*(2006.01)i<br>FI:  G02B6/036; G02B6/44 301A; G02B6/44 371; G02B6/44 366 |
| According to International Patent Classification (IPC) or to both national classification and IPC |

| B. FIELDS SEARCHED |
|---|
| Minimum documentation searched (classification system followed by classification symbols)<br>G02B6/02-6/036; G02B6/44 |
| Documentation searched other than minimum documentation to the extent that such documents are included in the fields searched<br>Published examined utility model applications of Japan 1922-1996<br>Published unexamined utility model applications of Japan 1971-2022<br>Registered utility model specifications of Japan 1996-2022<br>Published registered utility model applications of Japan 1994-2022 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| X | WO 00/62106 A1 (SUMITOMO ELECTRIC INDUSTRIES, LTD) 19 October 2000 (2000-10-19)<br>    p. 13, line 10 to p. 20, line 24, p. 37, line 20 to p. 41, line 6, fig. 4-8, 22-23 | 1-6, 8-11 |
| Y | | 7 |
| Y | WO 2020/250838 A1 (SUMITOMO ELECTRIC INDUSTRIES, LTD) 17 December 2020 (2020-12-17)<br>    paragraphs [0007]-[0021], [0071] | 7 |
| A | JP 2012-516473 A (CORNING INCORPORATED) 19 July 2012 (2012-07-19)<br>    paragraphs [0036]-[0042], fig. 5-6, 13 | 1-11 |
| A | JP 2011-197667 A (SUMITOMO ELECTRIC INDUSTRIES, LTD) 06 October 2011 (2011-10-06)<br>    paragraphs [0040]-[0043], fig. 6 | 1-11 |
| A | WO 2020/054753 A1 (FURUKAWA ELECTRIC CO LTD) 19 March 2020 (2020-03-19)<br>    paragraphs [0032]-[0037], [0057]-[0078], fig. 1 | 1-11 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **14 March 2022** | **29 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 283 352 A1

**INTERNATIONAL SEARCH REPORT**

| International application No. |
| --- |
| **PCT/JP2022/001856** |

**C.      DOCUMENTS CONSIDERED TO BE RELEVANT**

| Category* | Citation of document, with indication, where appropriate, of the relevant passages | Relevant to claim No. |
| --- | --- | --- |
| A | JP 2015-166853 A (SUMITOMO ELECTRIC INDUSTRIES, LTD) 24 September 2015 (2015-09-24)<br>    paragraphs [0018]-[0026], fig. 1-7 | 1-11 |
| A | WO 02/066390 A1 (SUMITOMO ELECTRIC INDUSTRIES, LTD) 29 August 2002 (2002-08-29)<br>    p. 21, lines 1-10 | 6 |
| A | WO 2017/170652 A1 (FUJIKURA LTD) 05 October 2017 (2017-10-05)<br>    paragraph [0061] | 6 |
| A | JP 2018-533079 A (CORNING INCORPORATED) 08 November 2018 (2018-11-08)<br>    entire text, all drawings | 1-11 |
| A | US 2019/0243063 A1 (CORNING INCORPORATED) 08 August 2019 (2019-08-08)<br>    entire text, all drawings | 1-11 |

Form PCT/ISA/210 (second sheet) (January 2015)

**INTERNATIONAL SEARCH REPORT**
Information on patent family members

International application No.

**PCT/JP2022/001856**

| Patent document cited in search report | | | Publication date (day/month/year) | Patent family member(s) | | | Publication date (day/month/year) |
|---|---|---|---|---|---|---|---|
| WO | 00/62106 | A1 | 19 October 2000 | US | 2001/0017967 | A1 | |
| | | | | paragraphs [0081]-[0101], [0182]-[0186], fig. 4-8, 22-23 | | | |
| | | | | EP | 1107027 | A1 | |
| | | | | CA | 2334888 | A1 | |
| | | | | AU | 3678400 | A | |
| WO | 2020/250838 | A1 | 17 December 2020 | US | 2021/0179762 | A1 | |
| | | | | paragraphs [0008]-[0024], table 2 | | | |
| | | | | EP | 3950752 | A1 | |
| | | | | CN | 113993923 | A | |
| | | | | TW | 202111036 | A | |
| JP | 2012-516473 | A | 19 July 2012 | US | 2010/0195966 | A1 | |
| | | | | paragraphs [0049]-[0055], fig. 5-6, 13 | | | |
| | | | | WO | 2010/088482 | A1 | |
| | | | | EP | 2391915 | A1 | |
| | | | | KR | 10-2011-0110827 | A | |
| | | | | CN | 102301262 | A | |
| | | | | RU | 2012136835 | A | |
| JP | 2011-197667 | A | 06 October 2011 | US | 2011/0211788 | A1 | |
| | | | | paragraphs [0047]-[0049], fig. 6 | | | |
| | | | | EP | 2362252 | A1 | |
| | | | | CN | 102193140 | A | |
| WO | 2020/054753 | A1 | 19 March 2020 | US | 2021/199883 | A1 | |
| | | | | paragraphs [0043]-[0048], [0072]-[0095], fig. 1 | | | |
| | | | | EP | 3851890 | A1 | |
| | | | | CN | 112654908 | A | |
| JP | 2015-166853 | A | 24 September 2015 | US | 2015/0226915 | A1 | |
| | | | | paragraphs [0020]-[0028], fig. 1-5 | | | |
| | | | | EP | 2908160 | A1 | |
| | | | | CN | 104834054 | A | |
| WO | 02/066390 | A1 | 29 August 2002 | US | 2004/0022510 | A1 | |
| | | | | paragraph [0084] | | | |
| | | | | EP | 1362835 | A1 | |
| | | | | TW | 241281 | B | |
| | | | | CN | 1457328 | A | |
| | | | | KR | 10-0889698 | B1 | |
| WO | 2017/170652 | A1 | 05 October 2017 | US | 2019/0113678 | A1 | |
| | | | | paragraph [0091] | | | |
| | | | | EP | 3438715 | A1 | |
| | | | | CN | 108885303 | A | |
| JP | 2018-533079 | A | 08 November 2018 | US | 2017/0075061 | A1 | |
| | | | | WO | 2017/048827 | A1 | |
| | | | | EP | 3350633 | A1 | |
| | | | | CN | 108055866 | A | |
| US | 2019/0243063 | A1 | 08 August 2019 | WO | 2019/152739 | A1 | |

Form PCT/ISA/210 (patent family annex) (January 2015)

**EP 4 283 352 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6500451 B
- JP 6527973 B
- JP 2003066259 A
- JP 2009122277 A

**Non-patent literature cited in the description**

- **TAMAS MIHALFFY et al.** Combined Mechanical-Optical Simulation to Predict Microbending Loss of Single Mode Fibers. *OECC 2019, WP4-C1,* 2019